# EUROPEAN PATENT APPLICATION

(11) **EP 4 450 321 A1**
(43) Date of publication of application: **23.10.2024**
(21) Application number: 24170875.9
(22) Date of filing: 17.04.2024
(51) Int. Cl.: B60L 53/35, A47L 11/40, B60L 53/16, B60L 53/36, B60L 53/37

(54) **CHARGING MECHANISM FOR AN AUTONOMOUS CLEANING ROBOT**

(30) Priority: 17.04.2023 SG 10202301063W
(71) Applicant: Lionsbot International Pte Ltd., Singapore 739571 (SG)
(72) Inventor: Boopathi, Kamalesh, 739571 Singapore (SG); Tay, Sunardi, 739571 Singapore (SG); Terntzer, Dylan Ng, 739571 Singapore (SG)
(74) Representative: Studio Torta S.p.A.

(57) **Abstract**

A charging mechanism for a robot includes a male module and a female module. The male module and the female module engage with each other to initiate a charging of the robot. The male module includes a charging arm comprising: a rear pivot block and a front arm assembly pivotally supported on the rear pivot block. The front arm assembly includes two electric contact plates supported at a distal end of the charging arm in a substantial arrow-shaped configuration.

## Description

### TECHNICAL FIELD

The present invention relates to autonomous cleaning robots, and more specifically to charging mechanisms used in the autonomous cleaning robots.

### BACKGROUND

The following discussion of the background to the invention is intended to facilitate an understanding of the present invention only. It should be appreciated that the discussion is not an acknowledgement or admission that any of the material referred to was published, known or part of the common general knowledge of the person skilled in the art in any jurisdiction as at the priority date of the invention.

Autonomous cleaning robots used in industrial and commercial applications should ideally require minimal human interaction to operate thereby allowing the robots to operate over long work cycles without intervention by an operator. Charging docks have therefore been developed for such autonomous cleaning robots to allow recharging at any time when required.

Such charging docks are typically provided with electrical contacts that can be brought into contact with cooperating electrical contacts provided on the robots. These electrical contacts provided in the charging dock and the robots may be in the form of spring-loaded charging contacts with flat plates which comes into contact with each other to establish an electrical connection to initiate charging... In order to maintain a desirable constant contact between the flat plates of the spring-loaded charging contacts, the robot will need to move towards the charging dock in a manner to ensure that there is always a contact pressure to maintain the desirable constant contact between the charging contacts of the dock and the robot. Applicant has identified multiple challenges to maintain the constant pressure between the charging contacts while ensuring uninterrupted charging. An object of the invention is to ameliorate one or more of the identified challenges encountered while charging the autonomous cleaning robots.

### SUMMARY

The present disclosure overcomes one or more challenges/shortcomings of the prior charging systems and provides additional advantages. Embodiments and aspects of the disclosure described in detail herein are considered a part of the claimed disclosure.

According to an aspect of the present disclosure, a charging mechanism for a robot includes a male module and a female module. The male module and the female module engage with each other to initiate a charging of the robot. The male module includes a charging arm comprising: a rear pivot block and a front arm assembly pivotally supported on the rear pivot block. The front arm assembly includes two electric contact plates supported at a distal end of the charging arm in a substantial arrow-shaped configuration.

In some embodiments, the female module includes an electrical contact assembly.

In some embodiments, the charging arm and the electrical contact assembly includes curved cam surfaces abutting each other establishing an electrical connection to initiate the charging for the robot.

In some embodiments, the electrical contact assembly includes a positive charging plate, a negative charging plate, housing blocks, and compression springs.

In some embodiments, the positive charging plate and the negative charging plate are respectively supported on displaceable support blocks, and wherein the charging plates is displaced in a direction that is perpendicular to the movement of the motion of the robot.

In some embodiments, the compression springs urge together the charging plates, wherein each charging plate comprises a curved cam surface.

In some embodiments, wherein the housing blocks, the support blocks and the charging plates when coupled together appears to be in the form of a jaw-type arrangement.

In some embodiments, wherein the electrical contact assembly is located behind a panel including an entrance flap.

In some embodiments, wherein the rear pivot block of the charging arm is supported on a support assembly for both sliding and pivotal movement of the front arm assembly.

In some embodiments, wherein the support assembly includes a plate, a sub frame, a rear plate, and a pair of linear shafts, each linear shaft including a compression spring.

In some embodiments, wherein the compression spring 7 provides a contact pressure and a travel tolerance for the charging arm 31 supported by the support assembly 30.

In some embodiments, wherein the support assembly is capable of a sliding linear movement, the charging arm is capable of a swivelling movement and the electrical contact assembly is capable of opening and closing jaw movement.

In some embodiments, wherein the front arm assembly further comprises a swivel mount, and a shaft with at least one torsion spring.

In some embodiments, wherein the rear pivot block and the swivel mount includes contoured faces abutting with each other during a swivelling movement of the swivel mount.

In some embodiments, wherein the electric contact plates are supported on the swivel mount.

In some embodiments, wherein the shaft and the torsion spring enable the swivel mount to be pivotally connected to the rear pivot block, and wherein the torsion spring returns the charging arm to a neutral position during the charging.

In some embodiments, wherein the charging arm includes an engagement tip with a first curved cam surface.

In some embodiments, wherein each electric contact plates comprises a second curved cam surface at a first end and straight surface at a second end.

In some embodiments, wherein the front arm assembly further includes a cover, wherein the cover includes openings to access the electric contact plates and a divider to separate the electric contact plates.

In some embodiments, wherein an angular range of movement of the front arm assembly is about 10 degrees to 15 degrees.

Other aspects and features will become apparent to those of ordinary skill in the art upon review of the following description of specific embodiments in conjunction with the accompanying figures.

### BRIEF DESCRIPTION OF THE DRAWINGS

In the figures, which illustrate, by way of example only, embodiments of the present invention,
[Figure 1] illustrates a perspective view of the male module and cooperating female module of the charging mechanism, in accordance with some embodiments of the present disclosure;
[Figure 2] illustrates a plan view of the male module and cooperating female module of the charging mechanism of [figure 1], in accordance with some embodiments of the present disclosure;
[Figure 3] illustrates a partial exploded view of the male module of the charging mechanism of [figure 1], in accordance with some embodiments of the present disclosure;
[Figure 4] illustrates an exploded view of the charging arm of the male module of [figure 3], in accordance with some embodiments of the present disclosure;
[Figure 5] illustrates an exploded view of the female module of the charging mechanism of [figure 1], in accordance with some embodiments of the present disclosure;
[Figure 6] illustrates a plan view of the male and female modules of the charging mechanism of [figure 1] when in a connected position in accordance with some embodiments of the present disclosure; and
[Figure 7] illustrates a perspective view of the male and female modules of the charging mechanism of [figure 1] when in a disconnected position in accordance with some embodiments of the present disclosure.
Other arrangements of the invention are possible and, consequently, the accompanying drawings are not to be understood as superseding the generality of the preceding description of the invention.

### DETAILED DESCRIPTION

Throughout this document, unless otherwise indicated to the contrary, the terms "comprising", "consisting of", "having" and the like, are to be construed as non-exhaustive, or in other words, as meaning "including, but not limited to".

Furthermore, throughout the specification, unless the context requires otherwise, the word "include" or variations such as "includes" or "including" will be understood to imply the inclusion of a stated integer or group of integers but not the exclusion of any other integer or group of integers.

In order to maintain the constant pressure at all instances between the spring-loaded charging contacts of the robot and the dock, the robot may need to push itself to provide an equal thrust force to counteract an outward force provided by the spring-loaded charging contact of the dock. This thrust force is provided in order to prevent the robot from being pushed away by the outward force, thereby disconnecting the electrical connection required for the charging. In order to provide this thrust force, a motor installed on the robot constantly operates deriving a small current to push itself against the dock which results in excessive heat being generated in the motor. Any poor contact between the charging contacts of the charging dock and the robot can result in a rising temperature of the charging contacts, because there is an increased resistivity under a poor contact pressure scenario. This heat generated in the motor, and the associated wasted energy reduces longevity of the charging mechanism of both the charging dock and the robot, and increases time to replenish battery charge of the robot.

In order to overcome the identified challenges encountered while charging the autonomous cleaning robots, the present subject provides a charging mechanism with a male module and female module. The male module includes a charging arm and the female module includes an electrical contract assembly. The charging arm is capable of a swivelling action in which a front arm assembly swivels with respect to a rear pivot block. The swivelling action is enabled using a swivel mount with torsion spring. The swivelling action of the charging arm will help to ensure that a continuous contact is maintained between the male and female modules even when a wheel axis of the robot is not parallel with the charging dock. The charging arm has two electric contact plates supported at a distal end of the charging arm in a substantial arrow-shaped configuration and the electrical contact assembly has two charging plates with curved cam surfaces. The arrow-shaped charging arm mates with the curved cam surfaces of the charging plates when the robot is driven towards the charging dock, thereby establishing an electrical connection to initiate the charging for the robot. Further, the electrical contact assembly includes compression springs installed with the charging plates which helps in situations where the robot is not aligned with the centre line of the charging dock.

Example embodiments of the present invention will now be described with reference to the accompanying drawings. The terminology used herein is for the purpose of describing particular embodiments only and is not intended to limit the scope of the present invention. Other definitions for selected terms used herein may be found within the detailed description of the invention and apply throughout the description. Additionally, unless defined otherwise, all technical and scientific terms used herein have the same meanings as commonly understood by one or ordinary skill in the art to which this invention belongs. Where possible, the same reference numerals are used throughout the figures for clarity and consistency.

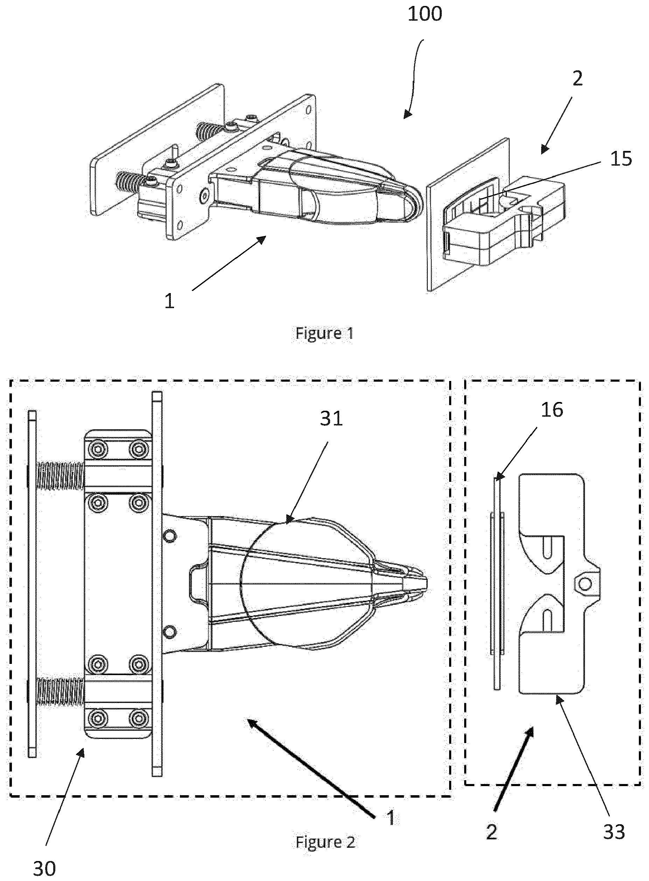

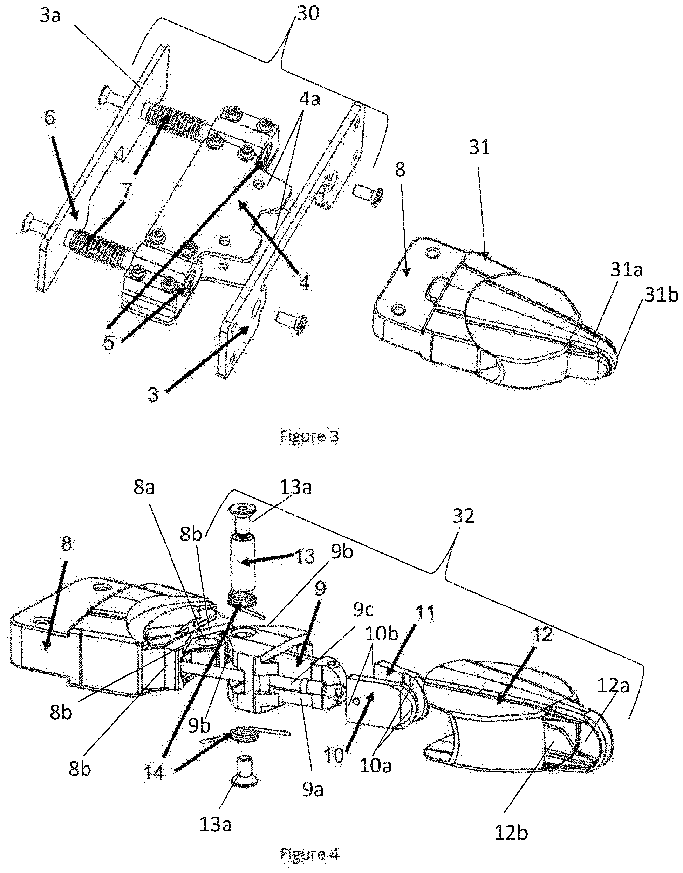

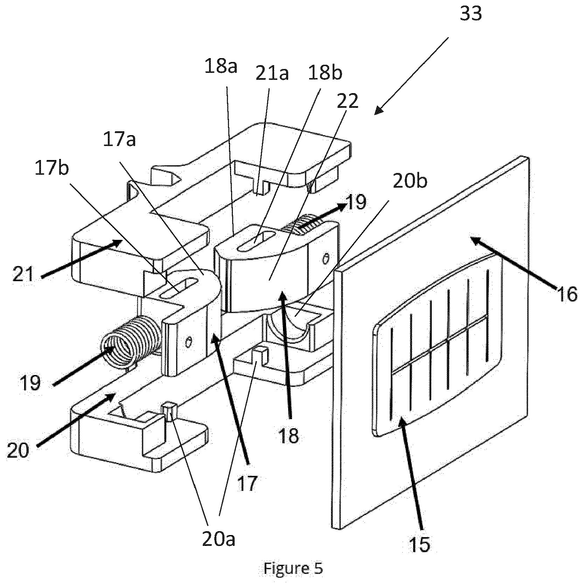

[Figures. 1 and 2] illustrates a charging mechanism 100 according to an exemplary embodiment of the present disclosure. The charging mechanism 100 includes a male module 1, and a female module 2. The male module 1 and the female module 2 engage with each other to initiate a charging of a robot. In some examples, the male module 1 may typically be installed on a charging dock (not shown), while the female module 2 may typically be installed on an autonomous cleaning robot (not shown). The male module 1 includes a charging arm 31 supported on a support assembly 30. In some examples, the support assembly 30 may be accommodated within the charging dock. The female module includes an electrical contact assembly 33. In some examples, electrical contact assembly 33 may be accommodated within the cleaning robot. The electrical contact assembly 33 may be located behind a panel 16. The panel includes an entrance flap 15. The panel 16 supported on an outer surface of the cleaning robot. It is also alternatively envisaged that the male module 1 be installed on the robot, with the female module 2 installed on the charging dock. According to an embodiment, the charging arm 31 comprises electric contact plates 10, 11 having curved cam surfaces (as shown in Figure 4) and the electrical contact assembly 33 comprises charging plates 17, 18 having curved cam surfaces (as shown in Figure 5). These curved cam surfaces of the charging plates 17, 18 and the contact plates 10, 11 abuts each other establishing an electrical connection to initiate the charging for the robot.

[Figures. 3 and 4] illustrates various components of the support assembly 30 and the charging arm 31 of the male module 1. The charging arm 31 includes a rear pivot block 8 secured to the support assembly 30. The support assembly 30 includes a plate 3, a sub frame 4, a rear plate 3a, and a pair of linear shafts 6. The plate 3 may act as a cantilever support point for the charging arm 31. The plate 3, for example, may be a metal plate. The sub frame 4 further includes opposing support plates 4a. In some examples, the rear pivot block 8 can be located and secured to the support plates 4a. According to an embodiment, the sub frame 4 may be supported by a pair of linear ball bearings 5 that are slidably supported on the pair of linear shafts 6 extending from the rear plate 3a. Each of the linear shafts 6 includes a compression spring 7, wherein each of the spring 7 being constrained between the rear plate 3a and the subframe 4. Each compression spring 7 act to provide both a contact pressure and a travel tolerance for the charging arm 31 supported by the support assembly 30. The travel tolerance may for example be about 16 mm, although this value can be varied depending on the actual work parameters of the charging mechanism 100 and/or robot braking/stopping behaviour. According to an embodiment, the disclosed support assembly 30 provides feedback to the robot to ensure that the charging arm 31 is in physical contact with the electrical contact assembly 33. In some examples, the feedback may be achieved using a sensor such as an Opto-Sensor (non-shown) positioned on a static structure behind the support assembly 30, the sensor detecting the displacement of the subframe 4, and therefore the charging arm 31 supported thereon.

[Figure. 4] illustrates in more detail of the various components of the charging arm 31. The charging arm 31 includes the rear pivot block 8 and a front arm assembly 32. The front arm assembly 32 is pivotally supported on the rear pivot block 8. As previously discussed, the rear pivot block 8 is supported on the sub frame 4 of the support assembly 30 to thereby allow for both sliding and pivotal movement of the front arm assembly 32. According to an embodiment, the front arm assembly 32 includes the electric contact plates 10, 11 supported at a distal end of the charging arm 31. According to an embodiment, the front arm assembly 32 includes a swivel mount 9, and a shaft 13 with at least one torsion spring 14. According to an embodiment, the rear pivot block 8 and the swivel mount 9 may include contoured faces which mate with each other during a swivelling movement of the swivel mount 9. The swivelling movement is effected by the combination of the shaft 13 and the torsion spring 14. According to an embodiment, the rear pivot block 8 includes a pivot hole 8a and stepped contoured front faces 8b on opposing sides of the rear pivot block 8. The pivot hole 8a may be provided for supporting a cylindrical shaft 13 and fasteners 13a. For example, the shaft 13 may include a hollow threaded portion on opposing ends into which the fasteners 13a may be fastened. In some examples, the shaft 13 may be a cylindrical shaft and the fasteners 13a may be screws. According to an embodiment, at least one torsion spring 14 may be attached to the shaft 13. According to another embodiment, a pair of torsion springs 14 (shown in Figure 4) may be attached to the opposing ends of the shaft 13. According to an embodiment, the shaft 13 and the torsion spring 14 may enable the swivel mount 9 o to be pivotally connected to the rear pivot block 8. According to an embodiment, the torsion spring 14 may be provided to return the charging arm 31 to a neutral position, typically at 0 degree, if it was swivelled during a charging operation. The torsion spring may be extending along the length of the shaft 13. It is also alternatively envisaged that a pin shaft and a circlip may be used with the torsion spring instead of the cylindrical shaft and the screws. In some examples, the swivel mount 9 may be made from high temperature resistant engineering plastic. As discussed previously, the front arm assembly 32 includes the electric contact plates 10,11 which may be supported by the swivel mount 9 thereon to respectively act as positive and negative terminals.

According to an embodiment, the contact plates 10,11 are supported at a distal end of the charging arm 31. In some examples, the distal end of the charging arm 31 is in a substantial 'arrow-shaped' configuration. The charging arm 31 comprising an engagement tip 31a with a first curved cam surface 31b. In some examples, the contact plates 10,11 may respectively have a generally concave contact surface. According to an embodiment, each contact plates 10, 11 include a second curved cam surface at a first end 10a. The first end 10a being proximal to the first curved cam surface 31b of the engagement tip 31a. Each contact plates 10, 11 include a straight surface at a second end 10b. The second end 10b being distal from the first curved cam surface 31b. According to an embodiment, the first curved cam surface abuts with at least a portion of the second curved cam surface. In some examples, the contact plates 10,11 may be made from a suitably conductive material such as copper. According to an embodiment, the swivel mount 9 may include constrained areas 9a and contoured rear faces 9b on opposing sides of the swivel mount 9. The constrained areas 9a in conjunction with locating pins (not shown) facilitates the mounting of the contact plates 10,11 thereon. According to an embodiment, the front arm assembly 32 includes a cover 12. The swivel mount 9 and contact plates 10, 11 are enclosed within the cover 12. The cover 12 may include openings 12a through which both the contact plates 10, 11 may be accessed. According to an embodiment, the cover may include a divider 12b to separate the contact plate 10 from the contact plate 11 to thereby ensure that there is no instances of electrical arcing or short circuiting when the contact plates 10,11 engage the electrical contact assembly 33 of the female module 2. The contact plate 10, for example, may be a positive contact plate and the contact plate 11, for example, may be a negative contact plate.

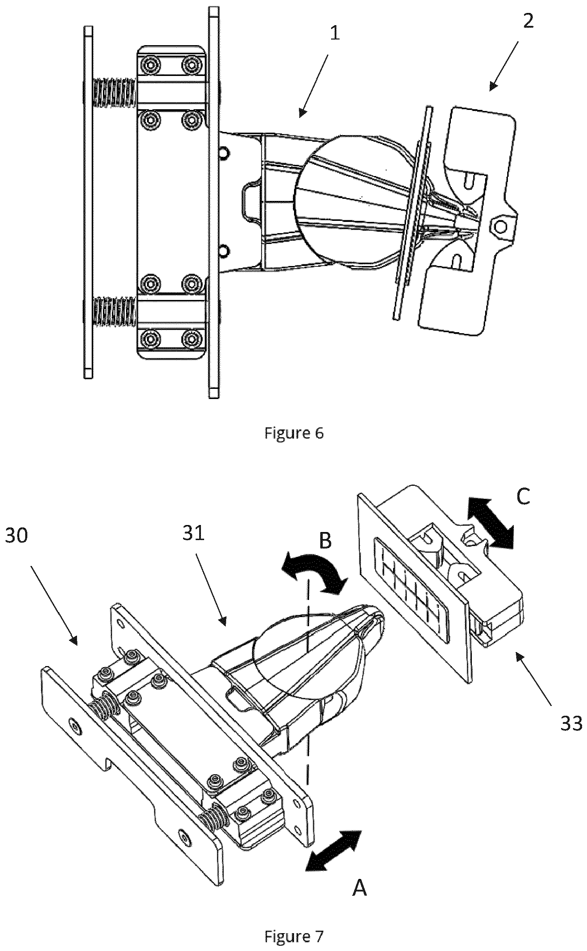

According to an embodiment, the contoured rear face 9b of the swivel mount 9 abuts with the stepped contoured front face 8b of the rear pivot block 8. This abutting arrangement restricts the maximum clockwise and counter clockwise pivotal movement of the swivel mount 9. In this regard, movement of the front arm assembly 32 is restricted within a predetermined angular range, with the contoured rear face 9b of the swivel mount 9 abutting the stepped contoured front face 8b of the rear block 8 at the maximum extent of travel of the swivel mount 9. In some examples, the angular range of movement of the front arm assembly 32 may be about 10 degrees to 15 degrees on each side depending on the specific operational requirements for the charging mechanism 100. This swivel action is required because the robot, particularly if relatively light in weight, can be diverted from its intended path when other mediums interfere with that path. The swivel action of the charging arm 31 will help to ensure that a continuous contact is maintained between the male and female modules 1,2 even when a wheel axis of the robot is not parallel with the charging dock. [Fig. 6] shows the male module 1 when connected to the female module 2, and showing the charging arm 31 in a swivelled position. When the male module 1 is connected with the female module 2, the two torsion springs 14 on opposing sides of the swivel mount 9 return the charging arm 31 to a neutral position, typically at 0 degree, if it was swivelled during the charging operation. In some example, one torsion spring 14 may be provided on the swivel mount 9 to return the charging arm 31 to a neutral position during the charging of the robot. According to an embodiment, cables 9c connected to the contact plates 10, 11 pass between the rear pivot block 8 and the swivel mount 9. In this regard, the torsion springs may need to provide sufficient torsion to overcome the forces exerted by the bending of the cables 9c due to swivelling of the charge arm 31.

[Figure. 5] illustrates details of various components of the female module 2. According to an embodiment, the female module 2 includes the panel 16 and the electrical contact assembly 33. The panel 16 supports the entrance flap 15 made of flexible material such as rubber to help protect the electrical contact assembly 33. The entrance flap 15 may allow the charging arm 12 to access the electrical contact assembly 33 when the robot is located at the charging dock. In some examples the flap 15 may prevent the electrical contact assembly 33 from contacting any liquid associated with the operation of the cleaning robot. According to an embodiment, the electrical contact assembly 33 includes the charging plates, for example, a positive charging plate 17, a negative charging plate 18. The electrical contact assembly 33 further includes housing blocks 20, 21, and compression springs 19. Each charging plate 17,18 may be made from an electrically conductive material such as copper. The positive charging plate 17 and the negative charging plate 18 are respectively supported on displaceable support blocks 17a,18a. These support blocks 17a,18a are respectively sandwiched between the housing blocks 20,21. In some examples, the housing blocks 20, 21 may be made of the same material as the swivel mount 9. These support blocks 17a,18a include slots 17b, 18b respectively. The slots 17b, 18b may be integrally formed on the support blocks 17a, 18a. The housing blocks 20, 21 include pair of locating pins 20a, 21a respectively. The pair of locating pins 20a, 21a may be integrally formed on the housing blocks 20, 21. A first pair of locating pins 20a protruding upwards may be integrally formed on the housing block 20. A second pair of locating pins 21a protruding downwards may be integrally formed on the housing block 21. According to an embodiment, the locating pins 20a,21a provided on the housing blocks 20, 21 engage with the slots 17b,18b provided support blocks 17a,18a with a clearance. This engagement with the clearance allows each charging plate 17,18 to be movable towards and away from each other in response to the charging arm 31 engaging with and disengaging from the charging plates 17,18. More particularly, the engagement tip 31a with the first curved cam surface 31b initially contacts the charging plates 17,18 to displace the charging plates 17,18 away from each other. The housing blocks 20,21 may include cavities 20b. The cavities 20b may be formed integrally on the housing blocks. The cavities 20b may be formed on the opposing ends of the housing blocks 20, 21. According to an embodiment, the cavities 20b are provided for accommodating the compression springs 19. The compression springs 19 are provided to urge together the charging plates 17,18 that are respectively supported on the support blocks 17a,18a. More particularly, after the displacement of the charging plates 17,18 by the initial contact of the engagement tip 31a, the compression springs 19 urge the charging plates 17, 18 counteracting the displacement in a manner to engage with the electric contact plates 10, 11. The electric contact plates 10, 11 being positioned adjacent to the engagement tip 31a and behind the first curved cam surface 31b. In some examples, the housing blocks 20, 21, the support blocks 17a, 18a and the charging plates 17, 18 when coupled together appears to be in the form of a 'jaw-type' arrangement. It is also alternatively envisaged that the housing blocks 20, 21 and the support blocks 17a, 18a may include additional fasteners or integrally formed slots or projections or integral cutouts or cavities to couple with each other and to accommodate the compression springs 19. The charging plates 17,18 may be connected via cables to a safety electrical contactor that acts like a gate between a battery of the robot and the charging plates 17,18. This will ensure that the charging mechanism 100 will only operate when it is safe to do so. A control system of the robot, which typically can include sensors and cameras, may only operate the charging mechanism 100 when the robot senses that it is very close to the charging dock, or when the robot senses the human hand of an operator trying to interact with the robot.

According to an embodiment, each charging plate 17,18 may include a third curved cam surface 22. The third curved cam surface 22 can engage with the second curved cam surface of the contact plates 10,11 of the charging arm 31. For example, when the charging arm engagement tip 31a is inserted between the charging plates 17,18, the curved cam surfaces of the charging plates 17, 18 and the contact plates 10, 11 abuts each other establishing the electrical connection to initiate the charging. The third curved cam surface 22 of each charging plate 17,18 can assist in ensuring that there is a smooth displacement of the charging plates 17,18 away from each other when the contact plates 10,11 are inserted between the charging plates 17,18. Furthermore, as the charging plates 17,18 may be displaced in a direction that is generally perpendicular to the movement of the motion of the robot, this arrangement will minimise any residual spring force acting in the direction of the wheel motion of the robot. In some examples, the compression springs 19 can compress further providing extra tolerance left and right which helps when the robot is not approaching directly along that centre line of the charging dock.

[Fig. 7] shows the different types of actions that can be achieved by the charging mechanism 100 including the sliding linear movement of the support assembly 30 as shown by arrow A, the swivelling movement of the charging arm 31 as shown by arrow B, and the opening and closing jaw motion/movement or translatory movement of the electrical contact assembly 33 as shown by arrow C. All these actions combine to provide a beneficial performance in the electrical characteristics of the charging mechanism 100 and does not affect the life of the driving unit or the traction motor of the robot as there are no significant residual forces applied to that driving unit.

The charging mechanism according to the present disclosure provides several advantages over currently available charging systems used for industrial and commercial autonomous cleaning robots. For example, the spring mounting in the form of the torsion spring 14 of the charging arm 31 that allows for both resilient linear and swivelling movement of the charging arm 31 together with the resilient spring mounting in the form of the compression springs 19 of the charging plates 17,18 of the electrical contact assembly 33 helps to ensure that charging of the robot can still be reliably conducted even in situations where the robot is not aligned with the centre line of the charging dock. The substantial arrow shaped configuration enabled by the contact plates 10,11 and the engagement tip 31a and the curved cam surfaces of the charging plates 17,18 and the contact plates 10, 11 ensures that a contact pressure can be maintained when there is misalignment of the robot with the charging dock ensuring reliable charging. The configuration of the charging mechanism 100 also reduces or eliminates the need for the motors of the robot to operate to maintain a contact pressure between the contact plates 10,11 and the charging plates 17,18 reducing the waste of energy and possible excessive heating of the motors leading to reduced charge times, and a longer operational life for the motors. In some examples, the maintenance of the charging contact pressure allows the battery of the robot to be charged at a higher charge current in the range of about 18A to 22A.

It should be appreciated by the person skilled in the art that the above invention is not limited to the embodiment described. It is to be appreciated that modifications and improvements may be made without departing from the scope of the present invention.

It should be further appreciated by the person skilled in the art that one or more of the above modifications or improvements, not being mutually exclusive, may be further combined to form yet further embodiments of the present invention.

## Claims

1. A charging mechanism (100) for a robot comprising:
a male module (1);
a female module (2);
wherein the male module (1) and the female module (2) engage with each other to initiate a charging of the robot, wherein the male module (1) further comprises:
a charging arm (31) comprising:
a rear pivot block (8); and
a front arm assembly (32) pivotally supported on the rear pivot block (8); wherein the front arm assembly (32) comprises: electric contact plates (10, 11) supported at a distal end of the charging arm (31) in a substantial arrow-shaped configuration.

2. The charging mechanism according to claim 1, wherein the female module (2) comprises an electrical contact assembly (33), and wherein the charging arm (31) comprises an engagement tip (31a).

3. The charging mechanism according to claim 1 or 2, wherein the charging arm (31) and the electrical contact assembly (33) comprises curved cam surfaces abutting each other establishing an electrical connection to initiate the charging for the robot.

4. The charging mechanism according to claim 2, wherein the electrical contact assembly (33) comprises a positive charging plate (17), a negative charging plate (18), housing blocks (20, 21), and compression springs (19).

5. The charging mechanism according to claim 4, wherein the positive charging plate (17) and the negative charging plate (18) are respectively supported on displaceable support blocks (17a, 18a), and wherein the charging plates (17,18) is displaced in a direction that is perpendicular to the movement of the motion of the robot.

6. The charging mechanism according to claim 4, wherein the compression springs (19) urge together the charging plates (17,18), wherein each charging plate (17, 18) comprises a curved cam surface (22).

7. The charging mechanism according to claim 4, wherein the housing blocks (20, 21), the support blocks (17a, 18a) and the charging plates (17, 18) when coupled together appears to be in the form of a jaw-type arrangement.

8. The charging mechanism according to claim 2, wherein the electrical contact assembly (33) is located behind a panel (16) comprising an entrance flap (15).

9. The charging mechanism according to claim 1, wherein the rear pivot block (8) is supported on a support assembly (30) for both sliding and pivotal movement of the front arm assembly (32).

10. The charging mechanism according to claim 9, wherein the support assembly (30) comprises a plate (3), a sub frame (4), a rear plate (3a), and a pair of linear shafts (6), each linear shaft including a compression spring (7).

11. The charging mechanism according to claim 10, wherein the compression spring (7) provides a contact pressure and a travel tolerance for the charging arm (31) supported by the support assembly (30).

12. The charging mechanism according to claim 11, wherein the support assembly (30) is capable of a sliding linear movement, the charging arm (31) is capable of a swivelling movement and the electrical contact assembly (33) is capable of opening and closing jaw movement.

13. The charging mechanism according to claim 1, wherein the front arm assembly (32) further comprises a swivel mount (9), and a shaft (13) with at least one torsion spring (14).

14. The charging mechanism according to claim 13, wherein the rear pivot block (8) and the swivel mount (9) comprises contoured faces abutting with each other during a swivelling movement of the swivel mount (9).

15. The charging mechanism according to claim 13, wherein the electric contact plates (10, 11) are supported on the swivel mount (9).

16. The charging mechanism according to claim 13, wherein the shaft (13) and the torsion spring (14) enable the swivel mount (9) to be pivotally connected to the rear pivot block (8), and wherein the torsion spring (14) returns the charging arm (31) to a neutral position during the charging.

17. The charging mechanism according to claim 1, wherein the front arm assembly (32) further comprises a cover (12), wherein the cover comprises openings (12a) to access the electric contact plates (10, 11) and a divider (12b) to separate the electric contact plates (10, 11).

18. The charging mechanism according to claim 1, wherein an angular range of movement of the front arm assembly (32) is about (10) degrees to (15) degrees.
